# EUROPÄISCHE PATENTSCHRIFT

(11) **EP 3 561 200 B1**
(45) Veröffentlichungstag und Bekanntmachung des Hinweises auf die Patenterteilung: **11.11.2026**
(21) Anmeldenummer: 19171303.1
(22) Anmeldetag: 26.04.2019
(51) Int. Cl.: E04G 21/04, B62D 21/09, B62D 24/00

(54) **AUTOBETONPUMPE**
AUTOMATIC CONCRETE PUMP
POMPE À BÉTON AUTOMATIQUE

(30) Priorität: 27.04.2018 DE 102018110285
(43) Veröffentlichungstag der Anmeldung: 30.10.2019
(73) Patentinhaber: Liebherr-Mischtechnik GmbH, 88427 Bad Schussenried (DE)
(72) Erfinder: Haberkorn, Rainer, 89284 Pfaffenhofen a.d. Roth (DE); Winter, Franz, 89284 Pfaffenhofen (DE); Westermann, Karl, 72574 Bad Urach (DE)
(74) Vertreter: Lorenz Seidler Gossel Part. mbB

(56) Entgegenhaltungen:
- CN-U- 201 953 077
- DE-A1- 10 110 840

## Beschreibung

Die Erfindung betrifft eine Autobetonpumpe mit einem Unterbau.

Autobetonpumpen, welche an sich aus dem Stand der Technik bekannt sind, erfüllen eine Fülle verschiedener Aufgaben beziehungsweise können zum Durchführen unterschiedlicher Anwendungen genutzt werden. Dies bringt es mit sich, dass mehr und mehr Sekundärfunktionen und Ausrüstung aller Art auf bekannten Autobetonpumpen mitgeführt werden müssen. Hierzu müssen die jeweiligen Ausrüstungen entsprechend an der Autobetonpumpe untergebracht, festgestellt bzw. gelagert werden.

Eine einheitliche Lösung für diese Aufgabe ist derzeit nicht bekannt und unterschiedliche Hersteller verfolgen unterschiedliche Strategien. So ist es bekannt, optionale Ausstattungen und Sekundärfunktionen auf ein aus Sicht des jeweiligen Hersteller sinnvolles Maß zu verringern oder eine Fülle optionaler Ausstattungen standardisiert und in Form von Ausstattungsbaukästen anzubieten. Auch eine Vorgehensweise, die dem Gedanken der reinen Manufaktur entspricht und auf die Erfüllung jedes einzelnen, individuellen Kundenwunsches durch entsprechende Individualkonstruktionen gerichtet ist, ist bekannt.

Derartige Ausführungen haben je nach dem verwendeten Abstütz- und Unterbausystemen grundsätzliche starke Auswirkungen auf die Lade- und Ausstattungsmöglichkeiten einer Autobetonpumpe. Dabei können die Ausrüstungen an unterschiedlichen Stellen der Autobetonpumpe festgemacht werden oder es kann auch fast vollständig an Platz zum Unterbringen der Ausrüstung oder sonstiger Ladung fehlen oder es bestehen keine Wahlmöglichkeiten oder Optionen zum einfachen und auch nachträglichen Vorsehen entsprechender Sekundärfunktionen.

DE 101 10 840 A1 offenbart eine Autobetonpumpe.

Vor diesem Hintergrund ist es Aufgabe der Erfindung, eine verbesserte Autobetonpumpe bereitzustellen, bei der Sekundärfunktionen und/oder zusätzliche Ausrüstungsteile besonders einfach und gegebenenfalls auch nachträglich mit der Autobetonpumpe gekoppelt werden können.

Diese Aufgabe wird erfindungsgemäß durch eine Autobetonpumpe mit den Merkmalen des Anspruchs 1 gelöst. Vorteilhafte Ausgestaltungen sind Gegenstand der Unteransprüche.

Demnach ist eine Autobetonpumpe mit einem Unterbau vorgesehen, wobei erfindungsgemäß wenigstens eine Kopplungseinrichtung mit dem Unterbau gekoppelt ist, über die mittels wenigstens eines Kopplungselements wenigstens eine Zusatzausstattung mit der Autobetonpumpe lösbar koppelbar ist.

Die erfindungsgemäße Idee ermöglicht es, eine wesentliche Eigenschaft einer gattungsgemäßen Autobetonpumpe zur nahezu vollständigen Nutzung des Unterbaus beziehungsweise eines Mastbocks als Tankvolumen beizubehalten und dabei insbesondere im Heckbereich der Autobetonpumpe eine standardisierte Schnittstelle zum Anbringen von Sekundärfunktionen, Ladung oder sonstigen optionalen Ausstattungen anzubieten. Hierbei ist erfindungsgemäß keine Reduktion des Tankvolumens der Autobetonpumpe erforderlich.

Im Unterschied zu vielen bekannten Abstützkonzepten gelingt es bei den gattungsgemäßen Autobetonpumpen durch die Anlenkung beider Stützbeine einer Fahrzeugseite mittels eines Bolzens den Mastbock zum einen sehr kompakt und zum anderen nahezu vollständig hohl zu gestalten. Dieser Hohlraum im Inneren des Mastbocks lässt sich nun in einer Weise zum Unterbringen des für den Betrieb notwendigen Hydrauliköls und des zum Reinigen der Autobetonpumpe notwendigen Wassers nutzen, sodass der Heckbereich der Autobetonpumpe frei von Tanks bleiben kann. In aus dem Stand der Technik bekannten Autobetonpumpen sind in diesem Heckbereich dagegen besagte Tanks vorgesehen.

Bei gattungsgemäßen Autobetonpumpen beziehungsweise deren Unterbauten entsteht durch diese Konstruktion von Aufgabetrichter und Wasserkasten des Pumpenaggregats auf dem Maschinenheck grundsätzlich Freiraum, der erfindungsgemäß dafür genutzt werden kann, mittels der Kopplungseinrichtung Zusatzausstattungen mit der Autobetonpumpe flexibel zu koppeln. Statt diesen Freiraum zur fixen Installation von Ausstattungen oder Ladungen aller Art zu nutzen, kann man beispielsweise an einer Grundfläche dieses Freiraums eine oder mehrere Montageschienen ähnlich den aus PKW-Kofferräumen bekannten Gepäckschienen vorsehen, an denen entlang etwa mittels Nutensteinen weitere Bauteile an nahezu beliebiger Stelle angebracht werden können.

In einer bevorzugten Ausführung der Erfindung ist denkbar, dass die Kopplungseinrichtung als einstückige Montageschiene ausgebildet ist. Die Montageschiene kann dabei Hinterschneidungen, Verzahnungen und/oder sonstige Geometrien umfassen, mittels derer die Kopplung der Zusatzausstattung an die Montageschiene und damit an die Autobetonpumpe erleichtert beziehungsweise ermöglicht wird.

Alternativ oder zusätzlich ist denkbar, dass die Autobetonpumpe wenigstens ein vorderes und wenigstens ein hinteres Schwenkbein umfasst, die über eine gemeinsame Schwenkachse relativ zu einem Unterbau der Autobetonpumpe schwenkbar sind, wobei die gemeinsame Schwenkachse einen zweigeteilten Schwenkbolzen umfasst und wobei die Schwenkbeine über einen oberen und einen unteren Schwenkbolzenteil des Schwenkbolzens mit dem Unterbau gekoppelt sind.

Der Begriff des Schwenkbolzens ist vorliegend breit zu verstehen und kann eine mehrstückig bzw. zweistückig gefertigte Komponente betreffen.

In einer alternativen bevorzugten Ausführung ist denkbar, dass die Kopplungseinrichtung als mehrstückige Montageschiene ausgebildet ist. Es können am Unterbau beispielsweise zwei C-Schienen längs, quer oder anderweitig orientiert beispielsweise an einer Oberseite eines Hilfsrahmens des Unterbaus angeordnet sein und eine entsprechende Montageschiene bilden.

Bei Angabe einer zulässigen maximalen Belastbarkeit im Raum und eines Bereichs für die anzustrebende Schwerpunktslage von Aufbauten beziehungsweise Zusatzausstattungen auf dem Schienensystem als standardisierte Schnittstelle ist es nun sowohl möglich, individuelle Ausstattungen auch nachträglich selbst zu gestalten, anzufertigen und an der Maschine anzubringen, als auch herstellerseitig zusätzliche beziehungsweise neue Ausstattungslösungen wesentlich einfacher als bisher mit der Autobetonpumpe zu koppeln beziehungsweise entsprechende Unterbringungsmöglichkeiten an der Autobetonpumpe vorzusehen.

In einer weiteren bevorzugten Ausführung ist denkbar, dass die Kopplungseinrichtung über einen Hilfsrahmen mit einem Fahrzeugrahmen gekoppelt ist. Der Hilfsrahmen kann dabei beispielsweise auf einem größer ausgeführten Fahrzeugrahmen angeordnet und mit diesem beispielsweise verschweißt sein.

In einer weiteren bevorzugten Ausführung ist denkbar, dass der Unterbau den Hilfsrahmen und/oder den Fahrzeugrahmen umfasst.

Die Kopplungseinrichtung ist im Heckbereich der Autobetonpumpe vorgesehen**.**

In einer weiteren bevorzugten Ausführung ist denkbar, dass die Kopplungseinrichtung eine insbesondere nach oben und/oder seitlich gerichtete Nut umfasst. Innerhalb der Nut können entsprechende Nutsteine zur Kopplung der Zusatzausstattung mit der Autobetonpumpe verschieblich und/oder feststellbar lagerbar sein.

In einer weiteren bevorzugten Ausführung ist denkbar, dass die Kopplungseinrichtung wenigstens einen Elektroanschluss und/oder wenigstens einen Hydraulikanschluss umfasst. Die erfindungsgemäße Idee, eine spezielle Kopplungseinrichtung im Zusammenhang mit einer gattungsgemäßen Autobetonpumpe zu verwenden, bei der Tanks oder ähnliche Geräte im Mastbock der Autobetonpumpe integriert sind, lässt sich somit dahingehend sinnvoll erweitern, dass die Kopplungseinrichtung als mechanische Schnittstelle beispielsweise in der Nähe eines Freiraums der Autobetonpumpe um eine hydraulische, elektrische und/oder elektronische Schnittstelle ergänzt wird um auch energiebetriebene Ausstattungen nutzen zu können. Selbstverständlich kann die erfindungsgemäß vorgesehene Kopplungseinrichtung auch in anderen Freiräumen der Autobetonpumpe vorgesehen sein, die nicht im Heckbereich beziehungsweise zwischen dem Heckbereich und Tanks der Autobetonpumpe vorgesehen sind.

In einer weiteren bevorzugten Ausführung ist denkbar, dass wenigstens zwei Kopplungseinrichtungen vorgesehen sind, zwischen und/oder auf denen Begehflächeneinrichtungen anordenbar, sind oder dass eine Kopplungseinrichtung vorgesehen ist, seitlich von der Begehflächeneinrichtungen insbesondere an die Kopplungseinrichtung anliegend anordenbar sind. Die Begehflächeneinrichtungen erleichtern dabei das Begehen der Kopplungseinrichtung beziehungsweise des Bereichs, in welchem die Kopplungseinrichtungen vorgesehen sind. Die Begehflächeneinrichtungen können wenigstens ein Bauteil umfassen, das beispielsweise genauso oder ähnlich hoch ausgeführt ist wie die Kopplungseinrichtungen und das beispielsweise zwischen zwei Kopplungseinrichtungen und/oder zu einer Kopplungseinrichtung benachbart und/oder anliegend positionierbar ist.

Bei Nichtnutzung der Kopplungseinrichtung für Sekundärfunktionen, Optionen oder Ladung kann die Kopplungseinrichtung als Träger für eine weitere Begehfläche dienen, die rechte und linke und/oder vordere und hintere Begehflächen verbindet.

Die Kopplungseinrichtung ist in einem Freiraum angeordnet **,** der zwischen einem Aufgabetrichter und einem Wasserkasten der Autobetonpumpe positioniert ist.

Weitere Einzelheiten und Vorteile der Erfindung sind anhand der in den Figuren beispielhaft gezeigten Ausführungen erläutert. Dabei zeigen:
- Figur 1:: eine erfindungsgemäße Autobetonpumpe in seitlicher Ansicht ohne Darstellung der rechten Stützbeine;
- Figur 2:: eine erfindungsgemäße Autobetonpumpe in Heckansicht; und
- Figur 3:: eine perspektivische Ansicht einer Kopplungseinrichtung einer erfindungsgemäßen Autobetonpumpe.

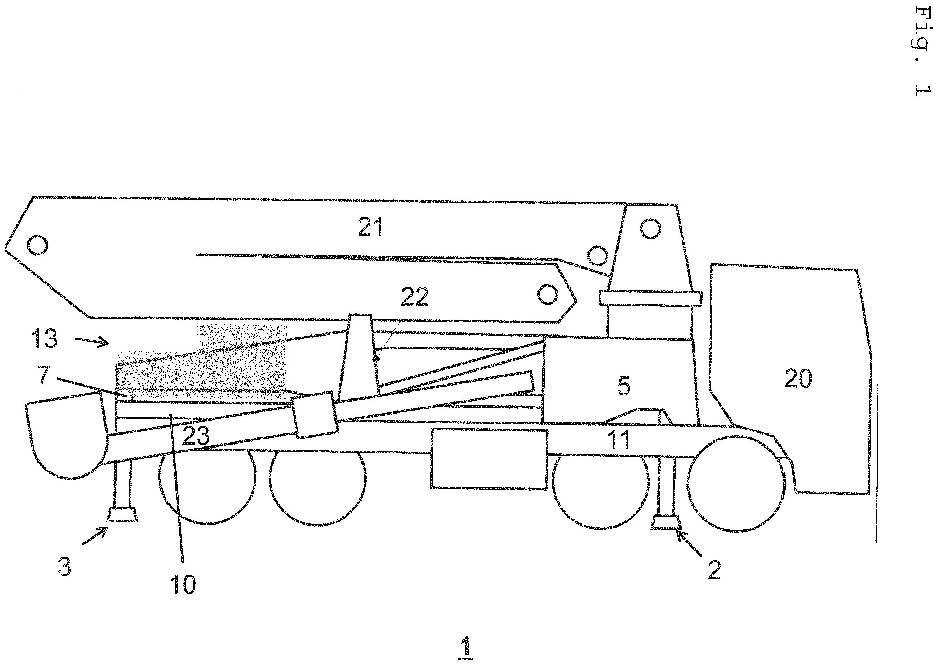

Figur 1 zeigt eine Autobetonpumpe 1 mit je zwei vorderen und zwei hinteren Schwenkbeinen 2, 3 die je links und rechts von der Autobetonpumpe an dieser angeordnet sind. Die Schwenkbeine 2, 3 sind über eine gemeinsame, nicht näher gezeigte Schwenkachse relativ zu einem Mastbock der Autobetonpumpe schwenkbar angeordnet. Die gemeinsame Schwenkachse der Schwenkbeine 2, 3 umfasst einen zweigeteilten Schwenkbolzen, sodass die beiden Schwenkbeine 2, 3 über einen oberen und einen unteren Schwenkbolzenteil des zweigeteilten Schwenkbolzens mit dem weiteren Unterbau 5 der Autobetonpumpe 1 koppelbar sind. Der Unterbau 5 der Autobetonpumpe kann die Schwenkbeine 2, 3, den Mastbock, Rahmen 10, 11 sowie sonstige Komponenten der Autobetonpumpe 1 umfassen.

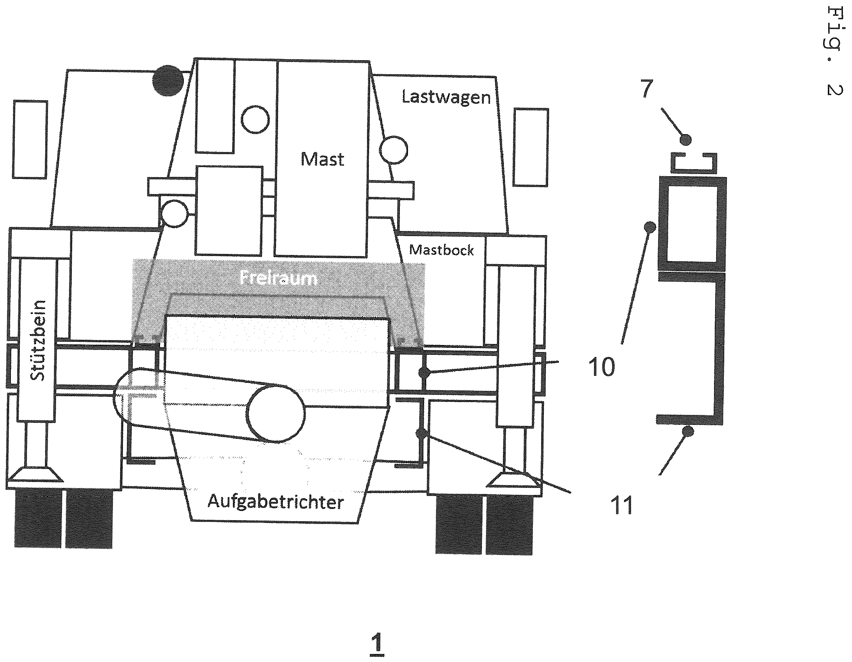

Wie aus Figur 2 klarer hervorgeht ist erfindungsgemäß wenigstens eine Kopplungseinrichtung 7 mit dem Unterbau 5 bzw. dem Mastbock der Autobetonpumpe 1 gekoppelt, wobei über die Kopplungseinrichtung 7 und mittels wenigstens eines nicht weiter gezeigten Kopplungselements wenigstens eine Zusatzausstattung mit der Autobetonpumpe 1 lösbar koppelbar ist.

Die Autobetonpumpe kann als Lastwagen 20 mit entsprechender Fahrerkabine ausgebildet sein und einen Verteilermast 21 umfassen, der auf einer Mastablage 22 in einem Transportzustand der Autobetonpumpe 1 ablegbar ist. Der Unterbau 5 kann einen Fahrzeugrahmen 11 und/oder Hilfsrahmen 10 umfassen und mit einem Mastbock gekoppelt sein, der den Verteilermast 21 mit dem Unterbau 5 koppelt. Im Bereich des Mastbocks und insbesondere wenigstens teilweise innerhalb des Mastbocks können ein oder mehrere Tanks vorgesehen sein, in denen Wasser zum Betrieb der Autobetonpumpe 1 lagerbar sind. Seitlich und/oder im hinteren Bereich der Autobetonpumpe 1 kann ein Pumpaggregat 23 vorgesehen sein, das dazu eingerichtet ist, flüssigen Beton über den Verteilermast 21 an eine gewünschte Stelle zu pumpen. Auf dem Fahrzeugrahmen 11 kann ein Hilfsrahmen 10 angeordnet sein, auf welchem die erfindungsgemäße Kopplungseinrichtung 7 angeordnet sein kann. Der Bereich, in welchem die Kopplungseinrichtung 7 vorgesehen ist, kann ein Freiraum 13 im Heckbereich der Autobetonpumpe 1 sein.

Figur 2 zeigt eine Heckansicht der Autobetonpumpe 1 und im rechten Bereich eine detaillierte Ansicht des Bereichs der Autobetonpumpe 1 mit der Kopplungseinrichtung 7, wobei im rechten Bereich der Figur 2 eine vergrößerte Darstellung des Hilfsrahmens 10 und des Fahrzeugrahmens 11 gezeigt ist, auf welchem sich eine als Montageschiene ausgebildete Kopplungseinrichtung 7 befindet. Selbstverständlich kann die Kopplungseinrichtung 7 abweichend von der in Figur 2 gezeigten Konstruktion an beliebigen dazu geeigneten Stellen der Autobetonpumpe 1 angeordnet sein.

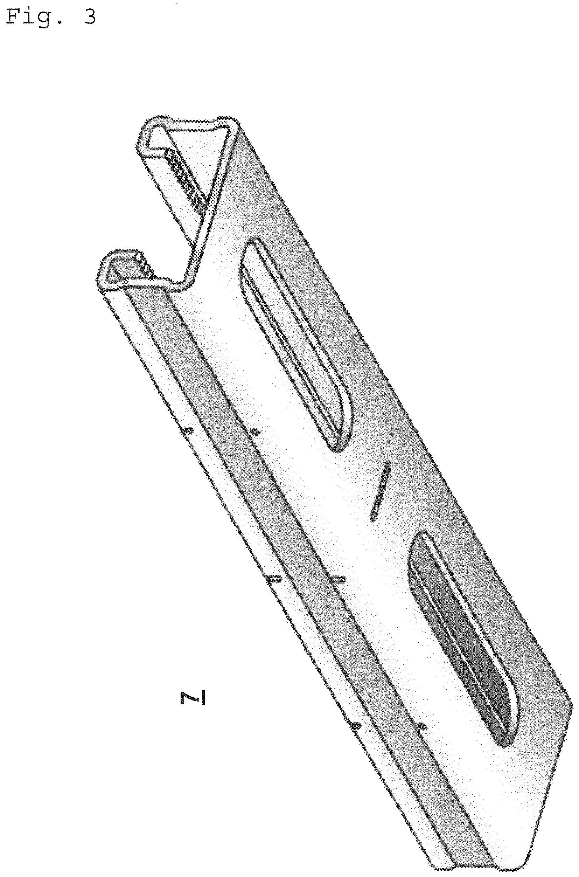

Eine vergrößerte Ansicht einer Ausführung der Kopplungseinrichtung 7 ist Figur 3 zu entnehmen, wo diese als Profilelement dargestellt ist.

Die Kopplungseinrichtung 7 kann als einstückige Montageschiene oder auch als mehrstückige Montageschiene ausgebildet sein. Alternativ oder zusätzlich kann die Kopplungseinrichtung 7 beispielsweise als Lochbild ausgebildet sein. Selbstverständlich sind auch Kombinationen denkbar, die teilweise als Montageschiene, teilweise als Lochbild und/oder sonstige Geometrie ausgebildet sind.

Die Kopplungseinrichtung 7 umfasst im Ausführungsbeispiel eine nach oben gerichtete Nut, in welche zum Befestigen von Zusatzausstattungen entsprechende Nutsteine verschieblich lagerbar beziehungsweise positionierbar sind.

Die Kopplungseinrichtung 7 kann weitere Anschlüsse wie beispielsweise Elektro- und/oder Hydraulikanschlüsse umfassen.

Es ist auch denkbar eine Vielzahl entsprechender Kopplungseinrichtungen 7 vorzusehen, welche beispielsweise parallel zueinander angeordnet sein können und über welche eine entsprechende Mehrzahl an Kopplungen zwischen der Autobetonpumpe 1 und entsprechenden Ausstattungen bereitstellbar ist.

## Patentansprüche

1. Autobetonpumpe (1) mit einem Unterbau (5), wobei
wenigstens eine Kopplungseinrichtung (7) mit dem Unterbau (5) gekoppelt ist, über die mittels wenigstens eines Kopplungselements wenigstens eine Zusatzausstattung mit der Autobetonpumpe (1) lösbar koppelbar ist, und
die Kopplungseinrichtung (7) im Heckbereich der Autobetonpumpe (1) vorgesehen ist,
**gekennzeichnet durch** einen Mastbock, in dem ein Wassertank zum Aufnehmen von Wasser für den Betrieb der Autobetonpumpe integriert ist, wobei die Kopplungseinrichtung (7) in einem Freiraum angeordnet ist, der zwischen einem Aufgabetrichter und einem Wasserkasten der Autobetonpumpe (1) positioniert ist.

2. Autobetonpumpe (1) nach Anspruch 1, **dadurch gekennzeichnet, dass** die Kopplungseinrichtung (7) als einstückige Montageschiene ausgebildet ist und/oder dass die Autobetonpumpe wenigstens ein vorderes und wenigstens ein hinteres Schwenkbein (2, 3) umfasst, die über eine gemeinsame Schwenkachse relativ zu einem Unterbau (5) der Autobetonpumpe (1) schwenkbar sind, wobei die gemeinsame Schwenkachse einen zweigeteilten Schwenkbolzen umfasst und wobei die Schwenkbeine (2, 3) über einen oberen und einen unteren Schwenkbolzenteil des Schwenkbolzens mit dem Unterbau (5) gekoppelt sind.

3. Autobetonpumpe (1) nach Anspruch 1, **dadurch gekennzeichnet, dass** die Kopplungseinrichtung (7) als mehrstückige Montageschiene ausgebildet ist.

4. Autobetonpumpe (1) nach einem der vorhergehenden Ansprüche, **dadurch gekennzeichnet, dass** die Kopplungseinrichtung (7) über einen Hilfsrahmen (10) mit einem Fahrzeugrahmen (11) gekoppelt ist.

5. Autobetonpumpe (1) nach Anspruch 4, **dadurch gekennzeichnet, dass** der Unterbau (5) den Hilfsrahmen (10) und/oder den Fahrzeugrahmen (11) umfasst.

6. Autobetonpumpe (1) nach einem der vorhergehenden Ansprüche, **dadurch gekennzeichnet, dass** die Kopplungseinrichtung (7) eine insbesondere nach oben und/oder seitlich gerichtete Nut (12) umfasst.

7. Autobetonpumpe (1) nach einem der vorhergehenden Ansprüche, **dadurch gekennzeichnet, dass** die Kopplungseinrichtung (7) wenigstens einen Elektroanschluss und/oder wenigstens einen Hydraulikanschluss (13) umfasst.

8. Autobetonpumpe (1) nach einem der vorhergehenden Ansprüche, **dadurch gekennzeichnet, dass** wenigstens zwei Kopplungseinrichtungen (7) vorgesehen sind, zwischen und/oder auf denen Begehflächeneinrichtungen (14) anordenbar sind oder dass eine Kopplungseinrichtung (7) vorgesehen ist, seitlich von der Begehflächeneinrichtungen (14) insbesondere an die Kopplungseinrichtung (7) anliegend anordenbar sind.

## Claims

1. Truck-mounted concrete pump (1) with a substructure (5),
wherein at least one coupling device (7) is coupled to the substructure (5), via which at least one additional equipment is releasably coupleable to the truck-mounted concrete pump (1) by means of at least one coupling element, and the coupling device (7) is provided in the rear region of the truck-mounted concrete pump (1),
**characterized by** a boom pedestal, in which a water tank for receiving water for the operation of the truck-mounted concrete pump is integrated, wherein the coupling device (7) is arranged in a clearance space which is positioned between a feed hopper and a water box of the truck-mounted concrete pump (1).

2. Truck-mounted concrete pump (1) according to claim 1, **characterized in that** the coupling device (7) is formed as a one-piece mounting rail and/or that the truck-mounted concrete pump comprises at least one front and at least one rear pivot leg (2, 3), which are pivotable relative to a substructure (5) of the truck-mounted concrete pump (1) via a common pivot axis, wherein the common pivot axis comprises a two-part pivot pin and wherein the pivot legs (2, 3) are coupled to the substructure (5) via an upper and a lower pivot pin part of the pivot pin.

3. Truck-mounted concrete pump (1) according to claim 1, **characterized in that** the coupling device (7) is formed as a multi-piece mounting rail.

4. Truck-mounted concrete pump (1) according to any one of the preceding claims, **characterized in that** the coupling device (7) is coupled to a vehicle frame (11) via an auxiliary frame (10).

5. Truck-mounted concrete pump (1) according to claim 4, **characterized in that** the substructure (5) comprises the auxiliary frame (10) and/or the vehicle frame (11).

6. Truck-mounted concrete pump (1) according to any one of the preceding claims, **characterized in that** the coupling device (7) comprises a groove (12) directed in particular upwardly and/or laterally.

7. Truck-mounted concrete pump (1) according to any one of the preceding claims, **characterized in that** the coupling device (7) comprises at least one electrical connection and/or at least one hydraulic connection (13).

8. Truck-mounted concrete pump (1) according to any one of the preceding claims, **characterized in that** at least two coupling devices (7) are provided, between and/or on which walkway devices (14) are arrangeable or that a coupling device (7) is provided, laterally of which walkway devices (14) are arrangeable in particular abutting the coupling device (7).

## Revendications

1. Pompe à béton automotrice (1) avec une sous-structure (5),
dans laquelle au moins un dispositif d'accouplement (7) est accouplé à la sous-structure (5), par l'intermédiaire duquel, au moyen d'au moins un élément d'accouplement, au moins un équipement supplémentaire peut être accouplé de manière amovible à la pompe à béton automotrice (1),
et le dispositif d'accouplement (7) est prévu dans la zone arrière de la pompe à béton automotrice (1),
**caractérisée par** un fût de mât, dans lequel un réservoir d'eau pour recevoir de l'eau pour le fonctionnement de la pompe à béton automotrice est intégré, dans laquelle le dispositif d'accouplement (7) est agencé dans un espace libre qui est positionné entre une trémie d'alimentation et une boîte à eau de la pompe à béton automotrice (1).

2. Pompe à béton automotrice (1) selon la revendication 1, **caractérisée en ce que** le dispositif d'accouplement (7) est réalisé sous la forme d'un rail de montage monobloc et/ou **en ce que** la pompe à béton automotrice comprend au moins une jambe pivotante avant et au moins une jambe pivotante arrière (2, 3), qui peuvent pivoter autour d'un axe de pivotement commun par rapport à une sous-structure (5) de la pompe à béton automotrice (1), dans laquelle l'axe de pivotement commun comprend un axe de pivotement en deux parties et dans laquelle les jambes pivotantes (2, 3) sont accouplées à la sous-structure (5) par l'intermédiaire d'une partie d'axe de pivotement supérieure et d'une partie d'axe de pivotement inférieure de l'axe de pivotement.

3. Pompe à béton automotrice (1) selon la revendication 1, **caractérisée en ce que** le dispositif d'accouplement (7) est réalisé sous la forme d'un rail de montage en plusieurs pièces.

4. Pompe à béton automotrice (1) selon l'une quelconque des revendications précédentes, **caractérisée en ce que** le dispositif d'accouplement (7) est accouplé à un châssis de véhicule (11) par l'intermédiaire d'un faux-châssis (10).

5. Pompe à béton automotrice (1) selon la revendication 4, **caractérisée en ce que** la sous-structure (5) comprend le faux-châssis (10) et/ou le châssis de véhicule (11).

6. Pompe à béton automotrice (1) selon l'une quelconque des revendications précédentes, **caractérisée en ce que** le dispositif d'accouplement (7) comprend une rainure (12) dirigée en particulier vers le haut et/ou latéralement.

7. Pompe à béton automotrice (1) selon l'une quelconque des revendications précédentes, **caractérisée en ce que** le dispositif d'accouplement (7) comprend au moins un raccord électrique et/ou au moins un raccord hydraulique (13).

8. Pompe à béton automotrice (1) selon l'une quelconque des revendications précédentes, **caractérisée en ce qu'**au moins deux dispositifs d'accouplement (7) sont prévus, entre et/ou sur lesquels des dispositifs de surface de circulation (14) peuvent être agencés, ou **en ce qu'**un dispositif d'accouplement (7) est prévu, latéralement par rapport auquel des dispositifs de surface de circulation (14) peuvent être agencés, en particulier en appui contre le dispositif d'accouplement (7).
